# EUROPEAN PATENT SPECIFICATION

(11) **EP 4 415 341 B1**
(45) Date of publication and mention of the grant of the patent: **21.01.2026**
(21) Application number: 24155719.8
(22) Date of filing: 05.02.2024
(51) Int. Cl.: H04N 1/21, H04N 1/42, H04N 7/18

(54) **VIDEO INTERCOM SYSTEM WITH ANSWERING SERVICE AND RELATED ANSWERING SERVICE MANAGEMENT METHOD**
VIDEO-GEGENSPRECHANLAGE MIT ANRUFBEANTWORTER UND ZUGEHÖRIGES VERFAHREN ZUR VERWALTUNG DES ANRUFBEANTWORTERDIENSTES
SYSTÈME D'INTERPHONE VIDÉO AVEC SERVICE DE RÉPONDEUR ET PROCÉDÉ DE GESTION DE SERVICE DE RÉPONDEUR ASSOCIÉ

(30) Priority: 09.02.2023 IT 202300002178
(43) Date of publication of application: 14.08.2024
(73) Proprietor: Comelit Group S.p.a., 24020 Rovetta San Lorenzo (BG) (IT)
(72) Inventor: Spadacini, Milo, I-24020 Rovetta (BG) (IT); Quartana, Stefano, I-24020 Rovetta (BG) (IT); Gallizioli, Diego, I-24020 Rovetta (BG) (IT)
(74) Representative: Caruti, Filippo

(56) References cited:
- US-A1- 2013 017 812
- US-A1- 2018 350 225
- US-A1- 2022 279 260

## Description

### TECHNICAL FIELD

The present invention refers to the sector of intercom systems. In greater detail, the present invention concerns a video intercom system and a related video intercom system management method. In particular, the video intercom system comprises an audio/video message recording service.

### BACKGROUND

Video intercom systems known in the art are systems comprising mutually heterogeneous devices, which are installed in different positions within a building or a cluster of buildings. These devices include indoor stations, outdoor stations, smartphones and gateway devices. These devices are able to interact and communicate through a wired connection, commonly of the Ethernet type, or through a wireless connection, commonly adhering to the Wi-Fi standard.

A video intercom system can reach a considerable complexity, for example, it can comprise several outdoor stations that allow communication with indoor stations of different units included in the building in which the system is installed. In addition, the same unit of the building may comprise several indoor stations connected to each other and, possibly, connectable to one or more portable user devices such as smartphones and tablets. Alternatively or in addition, the video intercom systems may comprise a gateway device connected to outdoor stations and indoor stations. The gateway device establishes the connections between these elements during a call between an outdoor station and an indoor station.

Typically, a unit - for example, a dwelling unit of a building - comprises a main indoor station - also referred to as a master - and may comprise secondary indoor stations - also referred to as a slave. The main indoor station is an indoor station connected to the outdoor station and to which the other indoor stations of the same unit are connected - for example, several indoor stations are installed in different rooms of the dwelling unit - or to which portable user devices can be connected.

In addition, current video intercom systems also implement answering service functions, that is, they allow audio/video messages to be recorded and played back at a later time. The answering service functionalities are implemented by the main indoor station of each unit of the building which is configured to store and play back audio/video messages. Consequently, it is possible to play back, record, and delete messages only through the main indoor station. Similarly, recording and playback settings can only be configured through the main indoor station.

US 2013/017812 describes an example of video intercom system known in the art. Other examples of known video intercom systems are disclosed by US 2018/0350225 and US 2022/0279260.

The Applicant has perceived the desire among users of the video intercom systems to decentralise the usability and the management of video intercom answering service functionalities.

### OBJECTS AND SUMMARY OF THE INVENTION

Aim of the present invention is to overcome the drawbacks of the prior art.

In particular, aim of the present invention is to provide a video intercom system and a related management method capable of providing answering service functionalities with audio and/or video messages efficiently.

A further aim of the present invention is to propose a video intercom system and a related management method capable of operating with limited hardware resources.

A further aim of the present invention is to propose a video intercom system and a related management method that does not require additional hardware and/or a substantial modification to a communication protocol in order to effectively implement an answering service functionality with audio and/or video messages.

These and other aims of the present invention are achieved by a system incorporating the features of the appended claims, which form an integral part of the present description.

According to a first aspect, the present invention is directed to a video intercom system comprising an outdoor station, a plurality of indoor stations and a station management device.

When the station management device receives a call from the outdoor station or from an indoor station, it activates a virtual station to which it forwards at least one between a video data stream and an audio data stream transmitted from the outdoor station or from the indoor station and it deactivates the virtual station. The virtual station is a virtual machine that replicates the operation of an indoor station and that stores at least one portion of the received video data stream and/or audio data stream. Advantageously, each recipient indoor station is associated to a corresponding virtual station. Consequently, activating and deactivating the virtual station comprises initiating and ending the execution of the virtual machine, respectively.

Thanks to the system configured to instantiate the virtual station, it is possible to manage a video intercom answering service in a simple and efficient way. In particular, the virtual station allows the video intercom answering service to be implemented with no need to modify a hardware structure of the system nor its components, nor are modifications to the communication protocol or to the logical structure of the system necessary. In addition, the system hardware/software resources necessary to manage the answering service are used only when there is a need to record an audio/video data stream. Finally, the claimed system allows the answering service to be activated even for only one or more desired subgroups of the indoor stations installed in a building.

In one embodiment, when the station management device receives a request to play back the at least one portion of the video data stream and/or audio data stream from an indoor station, it activates the virtual station again. In this case, the virtual station transmits the at least one stored portion of the video data stream and/or audio data stream to the indoor station and is deactivated by the station management device at the end of the transmission.

Preferably, the station management device verifies a logical address associated to the recipient indoor station that requested to play back the at least one portion of the video data stream and/or audio data stream from an indoor station. If the logical address corresponds to an expected logical address, it forwards the request to play back the at least one portion of the video data stream and/or audio data stream to the virtual station.

The system, thanks to the virtual station, is able to provide an on-demand playback of the recorded messages, thereby guaranteeing the same advantages set out above also during the playback step of the recorded messages.

In one embodiment, the management device executes a call management software process and a virtual station management software process.

In this case, when a call start message is received from the outdoor station - in order to initiate a call towards a recipient indoor station - the call management software process notifies the start of the call to the virtual station management software process, which activates the virtual station.

The just activated virtual station transmits a recording message to the call management software process - in the same way as a physical indoor station. In response, the call management software process transmits the call start message to the virtual station that provides for the storage of at least one part of the video data stream and/or audio data stream coming from the outdoor station or from the indoor station making the call - forwarded by the call management software process. Once at least one part of the received video data stream and/or audio data stream is stored, the virtual station transmits a call end signal to the call management software process.

Preferably, the outdoor station or the indoor station sends a call end message to the call management software process at the end of the call. Consequently, the call management software process notifies the end of the call to the virtual station management software process that sends a power-off command to the virtual station. In response to the power-off command, the virtual station completes storing the at least one part of the received video data stream and/or audio data stream and deactivates itself.

In one embodiment, when it receives the request to play back the at least one portion of the video data stream and/or audio data stream, the call management software process notifies the playback request to the virtual station management software process that activates the virtual station.

The virtual station, once it is active, initiates a playback functionality of the at least one portion of the stored video data stream and/or audio data stream and transmits it to the indoor station that made the playback request. Once transmission has been completed, the virtual station sends a playback end message to the indoor station that made the playback request, and the virtual station management software process deactivates the virtual station.

Thanks to the presence of the two management software it is possible to manage in parallel the calls received and the recordings/playbacks of answering service messages by activating and transferring data to the outdoor station only when strictly necessary.

According to the invention, the indoor stations are divided into a plurality of groups, for example based on their installation position (*e.g.,* the indoor stations of a group are installed in the same dwelling unit of a residential building). In this case, the station management device activates a virtual station associated to a corresponding group of indoor stations to which the recipient indoor station belongs.

In addition, the station management device may activate a virtual station associated to a corresponding group of indoor stations to which the indoor station that made the request to play back the at least one portion of the video data stream and/or audio data stream belongs.

The use of a virtual station dedicated to each group of indoor stations allows to guarantee greater security and privacy of the recorded data as well as it allows managing in parallel the recording/playback of messages towards and from multiple groups of indoor stations.

In one embodiment, the storage of at least one portion of the video data stream and/or audio data stream is kept in a memory area of the station management device. Alternatively, the portion of the video data stream and/or audio data stream is kept in a storage device connected to the station management device.

Preferably, the memory area in which the at least one portion of the video data stream and/or audio data stream is stored is uniquely associated to the recipient indoor station.

Centralized message storage allows to more efficiently and securely manage the stored audio/video data. In addition, the number of devices within the system that must possess audio/video data storage capacity is reduced, to the limit of a single element.

In one embodiment, the station management device is an indoor station connected to the outdoor station and to at least another indoor station of the plurality of indoor stations. In this case, multiple indoor stations operating as a data management device may be provided, for example one for each group of indoor stations into which the plurality of indoor stations is subdivided.

In a different embodiment, a single control module is provided which is connected to the outdoor station and to a group of indoor stations or to the (entire) plurality of indoor stations.

The system can be organized according to different criteria based on specific installation requirements.

A different aspect of the present invention concerns a video intercom system management method. The method provides for a station management device to perform the steps of:
receiving a call from the outdoor station or from one of the indoor stations which is directed to at least one recipient indoor station,
activating a virtual station, wherein the virtual station is a virtual machine that replicates the operation of an indoor station,
associating the virtual station to the recipient indoor station,
forwarding at least one between a video data stream and an audio data stream transmitted from the outdoor station or from the indoor station to the virtual station, and
deactivating the virtual station at the end of the call.

Further, the virtual station performs the step of storing at least one portion of the received video data stream and/or audio data stream.

Preferably, the station management device performs the further steps of:
receiving a request to play back the at least one portion of the video data stream and/or audio data stream from an indoor station, and
activating the virtual station.

Furthermore, the virtual station transmits the at least one stored portion of the video data stream and/or audio data stream to the indoor station and is deactivated by the station management device at the end of the transmission of the at least one stored portion of the video data stream and/or audio data stream.

The method according to the present invention allows to obtain the same advantages set out above in relation to the various embodiments of the video intercom system. In addition, the method lends itself to being implemented by a system already installed in a building, requiring minimal modifications to the system.

In one embodiment, the indoor stations are divided into a plurality of groups. In this case, the station management device performs the step of activating a virtual station associated to a corresponding group of indoor stations to which the recipient indoor station belongs.

In addition or alternatively, the step of storing at least one portion of the received video data stream and/or audio data stream provides for uniquely associating a memory area to the recipient indoor station, and further storing the at least one portion of the video data stream and/or audio data stream in the memory area uniquely associated to the recipient indoor station.

Thanks to these features, it is possible to guarantee greater data security and confidentiality without increasing the complexity of the video intercom system that implements the system.

Further features and purposes of the present invention will become more evident from the description below.

### BRIEF DESCRIPTION OF THE DRAWINGS

The invention is described hereinbelow with reference to some examples provided by way of non-limiting example and illustrated in the accompanying drawings. These drawings illustrate different aspects and embodiments of the present invention and reference numerals illustrating structures, components, materials and/or similar elements in different drawings are indicated by similar reference numerals, where appropriate.
Figure 1 is a schematic representation of a video intercom system according to an embodiment of the present invention installed in a building;
Figure 2 is a block diagram of an outdoor station of the system of Figure 1;
Figure 3 is a block diagram of a gateway of the system of Figure 1;
Figure 4 is a block diagram of an indoor station of the system of Figure 1;
Figure 5 is a flowchart of a message recording method executed by the system of Figure 1;

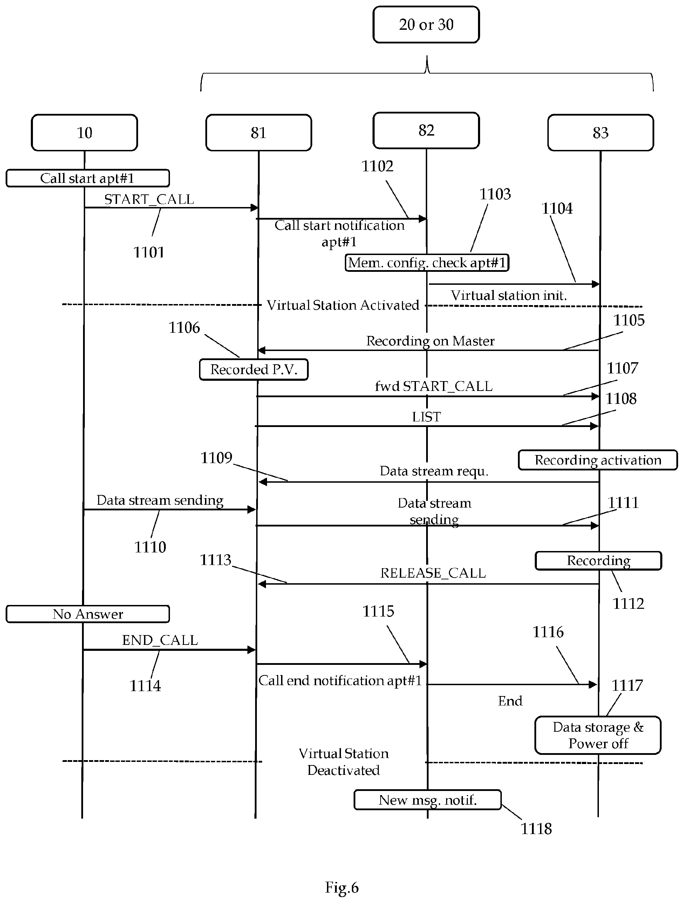

Figure 6 is a diagram of the sequence of operations executed by elements of the video intercom system during execution of the method of Figure 5;
Figure 7 is a flowchart of a message playback method executed by the system of Figure 1;
Figure 8 is a diagram of the sequence of operations executed by the elements of the video intercom system during execution of the method of Figure 7,
Figure 9 is a schematic representation of a video intercom system according to an alternative embodiment of the present invention installed in a building, and
Figure 10 is a flowchart of a procedure for maintaining the security of data exchanged between elements of the video intercom system.

### DETAILED DESCRIPTION OF THE INVENTION

Some preferred embodiments will be described in detail below, although the invention is susceptible to various alternative modifications. It must in any case be understood that there is no intention to limit the invention to the specific embodiment illustrated, but, on the contrary, the invention intends covering all the modifications that fall within the scope of the invention as defined in the claims.

Unless otherwise defined, all the terms of the art, notations and other scientific terms used herein are intended to have the meanings commonly understood by those who are skilled in the art to which this description pertains. In some cases, terms with commonly understood meanings are defined herein for the sake of clarity and/or for ease of reference; the inclusion of such definitions in the present description should thus not be interpreted as representing a substantial difference from what is generally understood in the art.

The terms "comprising", "having", "including" and "containing" are to be understood as open-ended terms (i.e. the meaning of "comprising, but not limited to") and are to be considered as a support also for terms such as "essentially consist of", "essentially consisting of", "to consist of" or "consisting of".

The use of "for example", "etc.", "or" indicates non-exclusive alternatives without limitation, unless otherwise indicated. The use of "includes" means "includes, but not limited to" unless otherwise indicated.

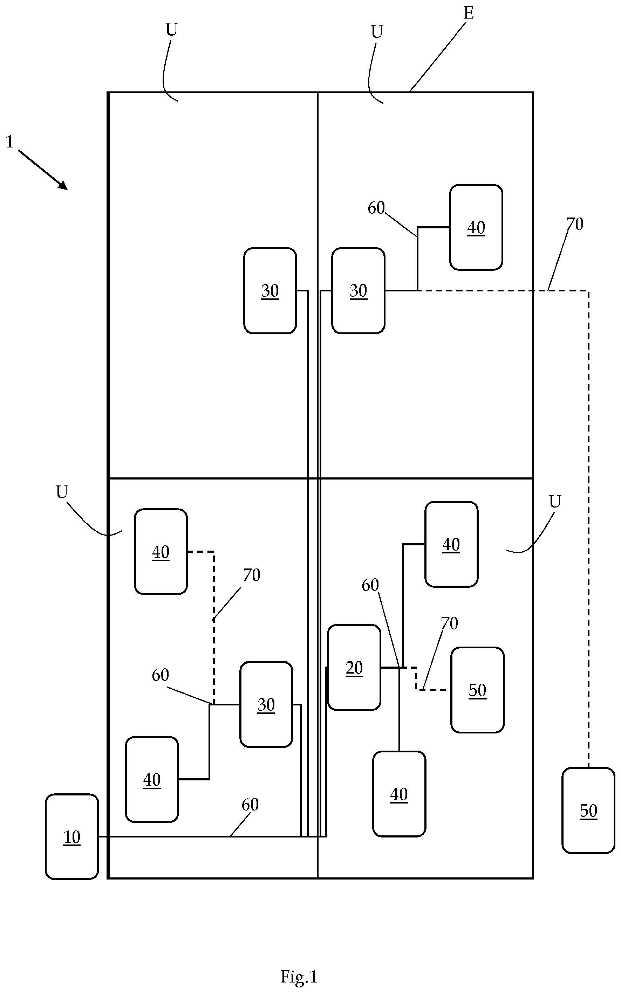

With reference to Figure 1, a video intercom system according to an embodiment of the present invention, hereinafter abbreviated as "system 1", comprises an outdoor station 10, a management device or gateway 20, a plurality of indoor stations 30, 40, and a plurality of portable user devices 50 - for example, smartphones, tablets, etc.

The system 1 is installed in a building E, which comprises multiple units U - for example, dwelling units. In detail, the outdoor station 10 is installed at an access point of the building E, for example a door of access to the building E or a gate of access to a property where building E is erected.

Otherwise, the gateway 20 is generally installed in a general electrical cabinet of the building E or of a corresponding unit U, while the indoor stations 30, 40 are installed inside the units U into which the building E is subdivided. Typically, each indoor station 30, 40 of a single unit U is installed in a different room (not indicated in Figure 1 for simplicity's sake) into which the single unit U is subdivided.

Finally, the portable devices 50 are generally carried by a user of the system within or outside the building E.

The elements 10-50 of the system are able to interact and communicate through a wired connection 60, preferably of the ethernet type, or a wireless connection 70, preferably according to the Wi-Fi standard. In the example of Figure 1, the outdoor station 10 is connected by means of a wired connection 60 to gateway 20 or to an indoor station 30 of each unit U. In particular, a gateway 20 or an indoor station 30 of each unit U is configured to operate as a main indoor station - hereinafter also referred to as "master 20 or 30" for brevity's sake - which coordinates the remaining secondary indoor stations 40 included in the respective unit U - hereinafter also referred to as "slave 40" for brevity's sake - included in each unit U are connected to the corresponding master 20 or 30 by means of a wired 60 or wireless 70 connection. Finally, the portable devices 50 are connected to the corresponding master 30 by means of a wireless connection 70.

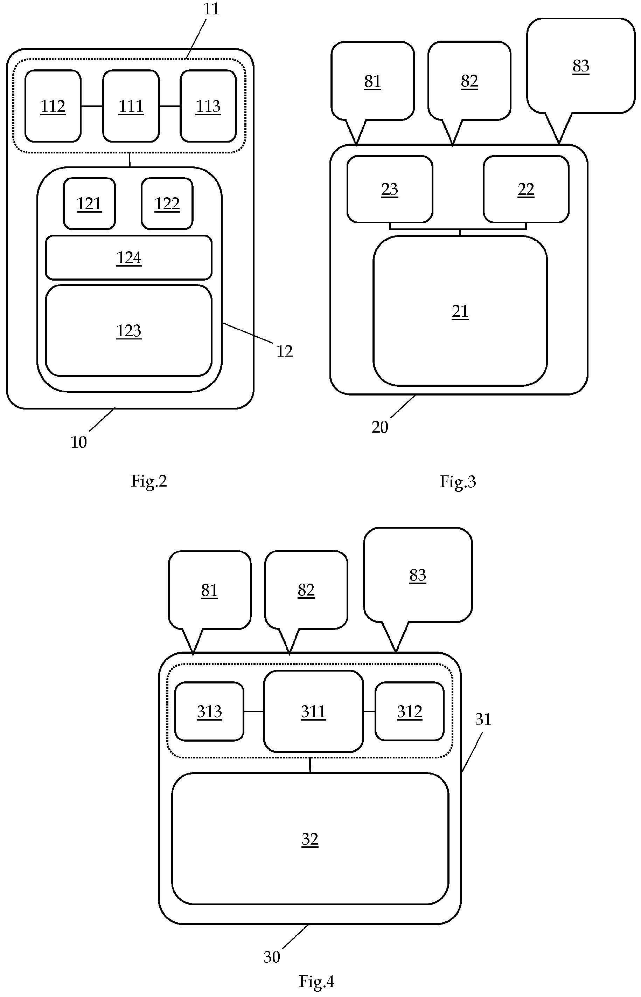

With reference to the block diagram of Figure 2, the outdoor station 10 comprises a control module 11 and a user interface 12. For example, the control module 11 comprises a microcontroller 111, a memory 112 and a transceiver unit 113. The user interface 12 comprises a video camera 121, a microphone/loudspeaker 122, a keypad 123 and, optionally, a display 124. The control module 11 is connected to the user interface 12 to control the operation thereof. In addition, the control module 11 makes a connection request with the masters 20 or 30 and manages a stream of data exchanged between the outdoor station 10 and the master 20 or 30 as a function of a user's interaction with the user interface 12.

The gateway 20 - illustrated schematically in Figure 3 - comprises a control module 21, a memory 22 and a transceiver module 23. The control module 21 is configured to control the transceiver module 23 and the memory module 22 to establish and manage data connections with the respective slaves 40 and the outdoor station 10, or with masters 20 or 30 of different units U.

The generic indoor station 30, 40 - illustrated schematically in Figure 4 - comprises a control module 31 and a user interface 32. For example, the control module 31 comprises a microcontroller 311, a memory 312, and a transceiver unit 313. The user interface 32 comprises a touch screen and possibly one or more keys (not illustrated). The control module 31 is connected to the user interface 32 and manages the operation of the indoor station 30, 40. In particular, if the indoor station 30 is configured to operate as a master, it establishes and manages data connections with the respective slaves 40, the outdoor station 10 and, possibly, other masters 20 or 30 installed in different units U.

The portable user device 50 - not described here as it is known - implements a software application that allows to connect the portable user device 50 to the system 1, in particular, to the respective master 20 or 30 and operate as a secondary outdoor station - i.e. a slave.

In addition, each master 20 or 30 manages an answering service functionality. The answering service functionality allows storing, keeping and playing back audio and/ or video recordings made during a call, or an attempt to call, between the outdoor station 10 or an indoor station 30, 40 and a recipient indoor station 30, typically a master 20 or 30.

In order to manage the calls and the answering service functionality, each master 20 or 30 executes a plurality of software processes. In the example considered, the master 20 or 30 executes a call management software process - hereinafter referred to as "call manager 81" for brevity's sake - and an answering service management software process - hereinafter referred to as "answering service manager 82". In addition, the master 20 or 30 executes a virtual machine - also referred to as "virtual station 83" hereinafter - for managing the storage and playback of the audio/video recordings as described below in the present description.

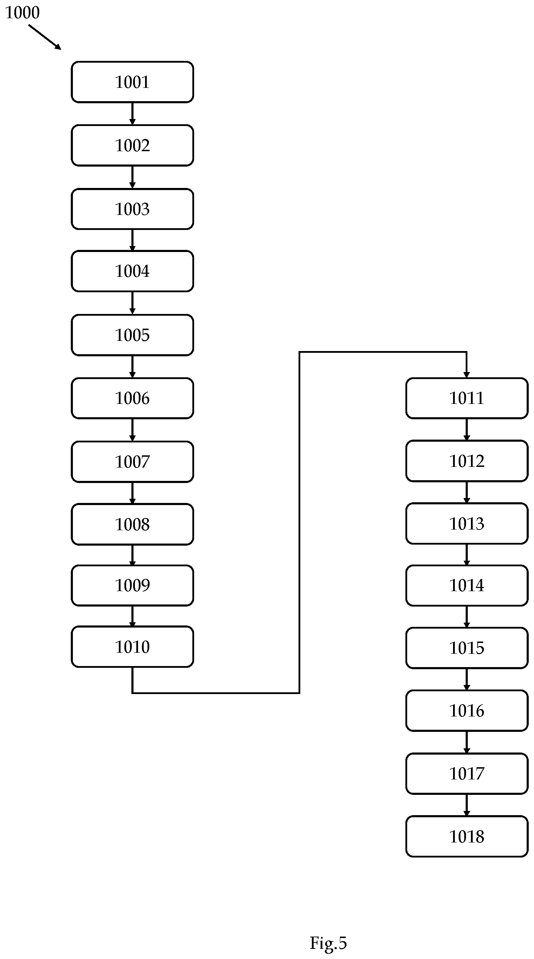

The described system 1 implements an audio/video recording method 1000 of which Figure 4 is a flowchart while Figure 5 is a flowchart of the sequence of operations executed by elements of the system 1.

In the example considered, the method 1000 is initiated by receiving at a selected recipient master 20 or 30 a call initiation message START_CALL emitted by the outdoor station 10 (step 1001, in Figure 4 and operation 1101 in Figure 5). In general, the initiation message is generated by a user making a call through the user interface 12 of the outdoor station 10 to communicate with individuals in the unit U associated to the recipient master 20 or 30.

The call initiation message START_CALL is analysed by the call manager 81, which forwards the call initiation message START_CALL to any slaves 40 (step 1002) and notifies the start of a call to the answering service manager 82 (step 1003 and operation 1102).

Preferably, the answering service manager 82 analyses a set of configuration settings associated to the recipient master 30 (step 1003 and operation 1103) kept in the memory 22 or 312. For example, the configuration settings comprise information about the structure of the virtual machine to be instantiated and/or about the type of data stream to be stored - *e.g.* video data stream, audio data stream, audio and video data stream -, recording even in case of answer, recording of communications from outdoor station 10, another indoor station 40 or 50 and/or master 20 or 30 of a different unit U, a duration of the recording of the stream, etc. In one embodiment, there are defined dedicated configuration settings of the virtual station 83 for each group of indoor stations installed in the same unit U of the building (*e.g.,* there are defined dedicated configuration settings associated to the indoor stations and possible gateway of the same dwelling unit).

The answering service manager 82 then initiates an instance of the virtual station 83 (step 1004 and operation 1104), preferably on the basis of the configuration settings associated to the recipient master 20 or 30.

Advantageously, the virtual station 83 is a virtual machine configured to emulate an indoor station of the system - that is, it is a software application that replicates the functionality of an indoor station. Preferably, the virtual station 83 emulates the functionalities of a secondary indoor station - i.e., a slave 40 or 50 - associated to the recipient master 20 or 30.

Once it is active, the virtual station 83 sends a recording request to the master 20 or 30 (step 1005 and operation 1105). The master 20 or 30 records the virtual station 83 and considers the virtual station 83 as one of the associated real slaves 40 or 50 (step 1006 and operation 1106). In other words, virtual station 83 is identified by a respective system code 1 - *e.g.,* a network address - and exchanges data with other elements of the system 1 according to the adopted protocol - *e.g.,* TCP/IP.

At this point the master 20 or 30 forwards the initiation call message START_CALL to the virtual station 83 (step 1007 and operation 1107). In other words, the master 20 or 30 takes the same actions towards the virtual station 83 performed for any other slave 40 or 50 connected to it.

In parallel, or subsequently, to the call initiation message START_CALL, the virtual station also receives a message LIST from the master 30 or 40 (step 1008 and operation 1108), which contains a list of the caller's capabilities, i.e. the ability to provide audio, video or both data streams.

Consequently, the virtual station 83 is able to request and initiate the recording of the data stream coming from the outdoor station (step 1009 and operation 1109), preferably by specifying the desired type of data streams (audio and/or video). The data stream generated by the outdoor station 10 is received by the master 20 or 30 (step 1010 and operation 1110) and then forwarded by the master 20 or 30 to the virtual station 83 (step 1011 and operation 1111). In particular, in case the outdoor station 10 transmits audio and video data streams, the master 20 or 30 will forward both data streams or only one between the audio data stream and the video data stream based on what is required by the virtual station 83 - that is, based on the specific configuration of the virtual station 83.

In the considered embodiment, the virtual station 83 performs a recording of the required audio and/or video data stream for a predetermined duration (step 1012 and operation 1112) for example based on the configuration settings mentioned above in relation to step 1003.

After making the recording, virtual station 83 sends a call shutdown message RELEASE_CALL to the master 20 or 30 (step 1013 and operation 1113).

After a time interval has elapsed without an answer from an individual through the master 20 or 30, or a slave 40 or 50, the indoor station 10 sends an end message call END_CALL (step 1014 and operation 1114) to the master 20 or 30. The communication channel between outdoor station 10 and master 20 or 30 is thus shut down.

In response to receiving the call end message, the call manager 81 notifies the answering service manager 82 of the call end (step 1015 and operation 1115).

In turn, the answering service manager 82 sends a termination command to the virtual station 83 (step 1016 and operation 1116).

Consequently, the virtual station 83 saves the audio and/or video data stream recording made in the memory 22 or 312 and ends the execution (step 1017 and operation 1117). In other words, the virtual station 83 is deactivated once a portion of the received audio and/or video data stream is stored.

Finally, the answering service manager sends a notification to all slaves 40 or 50 connected to the master 20 or 30 to inform them of the possibility of playing back the just stored and not played back audio and/or video data stream (step 1018 and operation 1118). Preferably, the notification transmitted by the answering service manager 82 comprises an identifier of the audio and/or video data stream that allows it to be uniquely identified.

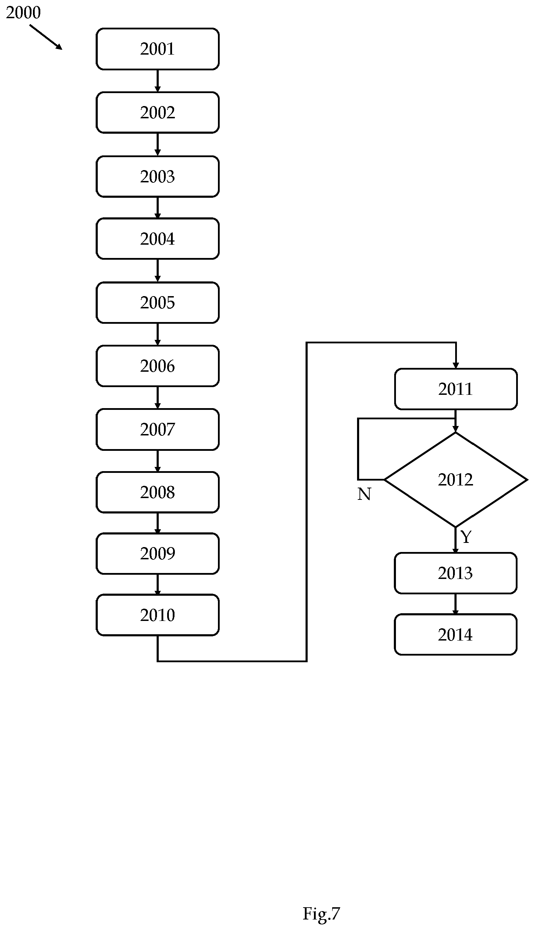

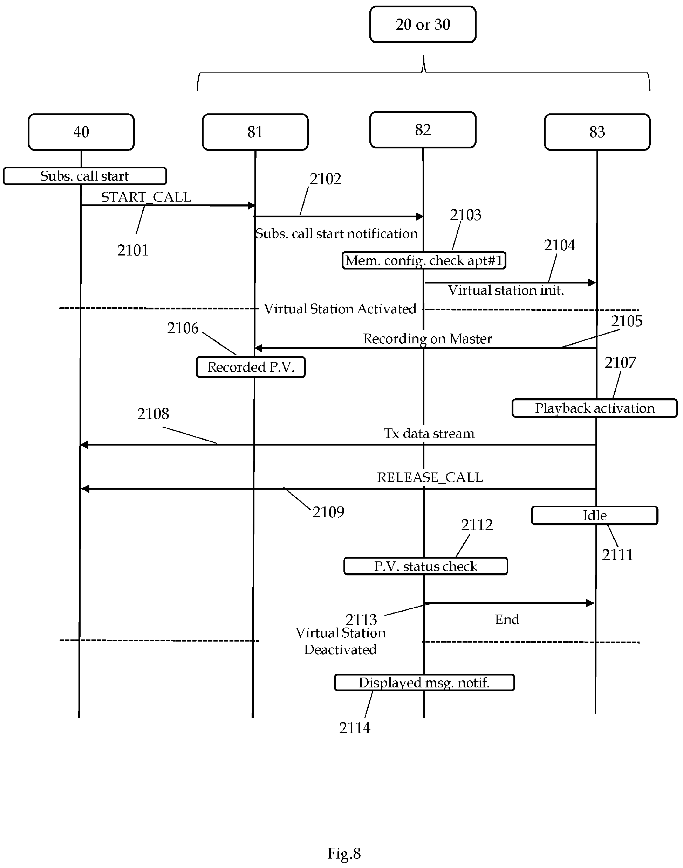

The described system 1 implements an audio/video playback method 2000 of which Figure 7 is a flowchart while Figure 8 is a flowchart of the sequence of operations executed by elements of the system 1.

In the example considered, the method 2000 is initiated by receiving at a master 20 or 30 (step 2001, in Figure 7 and step 2101 in Figure 8) a call initiation message START_CALL emitted by a slave 40. In this case, the call start message START_CALL contains an identifier of a specific audio and/or video data stream stored in the memory 22 or 312 of the master 20 or 30 (as mentioned in step 1016 of the method 1000). In this case, the call is initiated by a user interacting with the user interface 32 of the slave 40 by selecting a playback of the specific stored audio and/or video data stream.

The call manager 81 notifies the answering service manager of the start of a call for the playback of the stored audio and/or video data stream (step 2002 and operation 2102).

Preferably, the answering service manager 82 analyses a set of configuration settings associated to the recipient master 30 (step 2003 and operation 2103) kept in the memory 22 or 312. For example, during playback, verification simply comprises checking that the playback of the recorded messages is enabled.

The answering service manager 82 then initiates an instance of the virtual station 83 (step 2004 and operation 2104), preferably on the basis of the configuration settings associated to the recipient master 20 or 30.

Once it is initiated, the virtual station 83 sends a recording request to the master 20 or 30 (step 2005 and operation 2105). The master 20 or 30 records the virtual station 83 and considers the virtual station 83 as one of the associated real slaves 40 or 50 (step 2006 and operation 2106). Then, the virtual station 83 accesses the requested stored audio and/or video data stream (step 2007 and step 2107) and initiates playing it back, i.e. the virtual station 83 sends the requested stored audio and/or video data stream to the slave 40 that requested it (step 2008 and step 2108). In general, the data stream is transferred from the virtual station 83 to the slave 40 which makes a request thereof through the respective master 20 or 30.

Once the playback of the stored audio and/or video data stream is ended (step 2009 and operation 2109) the virtual station 83 sends a call termination message RELEASE_CALL to the slave 40 which requested the playback of the stored audio and/or video data stream (step 2010 and operation 2110) and moves into an idle status (step 2011 and operation 2111).

The answering service manager 82 periodically verifies a status of the virtual station 83 (decision step 2012 and operation 2012). In one embodiment, the status verification comprises detecting a persistence of the idle status of the virtual station 83 for a period greater than or equal to a threshold value, for example equal to three seconds. In case the virtual station 83 is in a data stream recording or playback status (output branch N of step 2012) the answering service manager 82 does not perform any action and verifies again the status of the virtual station after a predetermined period of time τ. Otherwise, if the virtual station 83 is in an idle status (output branch Y of step 2012) - i.e., the call between virtual station 83 and slave 40 is ended **-,** the answering service manager 82 sends a termination command to the virtual station 83 (step 2013 and operation 2113) which ends the execution of the virtual station 83.

Finally, the answering service manager 82 notifies the slaves 40 or 50 associated to the master 20 or 30 that the stored audio and/or video data stream requested by the slave 40 has been played back (step 2014 and operation 2114).

However, it is clear that the above examples must not be interpreted in a limiting sense and the invention thus conceived is susceptible of numerous modifications and variations.

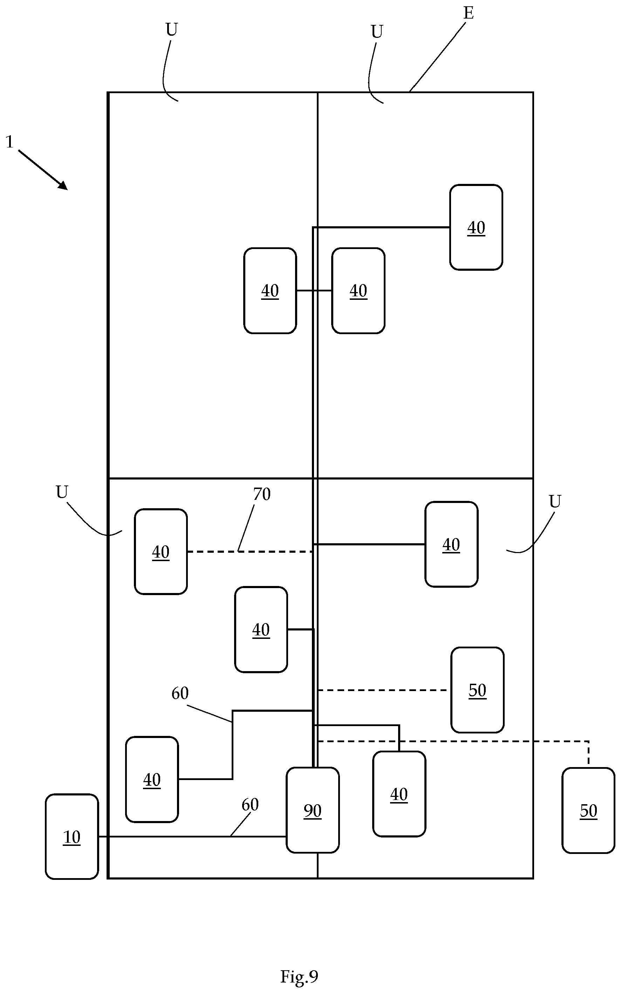

For example, in alternative embodiments (not illustrated) the answering service may be managed by a single element of the system, preferably, a central gateway 90 connected to the outdoor station 10 and to the indoor stations 40 or 50, as schematically illustrated by the block diagram of Figure 9. In this case, the answering service manager 82 and the virtual stations 83 are executed by the central gateway 90 in a manner similar to what is described above. In addition, the central gateway 90 operates as a master for all indoor stations installed in the building E. In other words, all data streams between the outdoor station and one or more indoor stations as well as the communications between indoor stations of the same unit U or between indoor stations of different units U are managed through the central gateway 90. As will be apparent to the skilled person, the central gateway 90 is configured to separately manage groups of indoor stations 40 or 50, in particular groups of indoor stations 40 or 50 associated to the same unit U of the building E. Advantageously, albeit not in a limiting manner, the central gateway 90 is configured to execute a dedicated virtual station for each of the groups of indoor stations 40 or 50 into which the indoor stations 40 or 50 installed in the building E are divided.

In one embodiment, regardless of the implementation of a plurality of answering service managers 82 in as many masters 20 or 30 or of a centralized answering service manager 82 in a central gateway 90, each group of indoor stations, i.e. one or more indoor stations 20-50, is uniquely associated to a corresponding virtual station 83.

In a non-limiting way, a logical address is defined which uniquely identifies each group within the system 1. In addition, an identifier is assigned to each station 20-50 belonging to the group. For example, a master identifier is assigned to the master 20, 30 of the group, while slave identifiers, for example corresponding to progressive numbers, are each assigned to a respective slave 40-50 of the group.

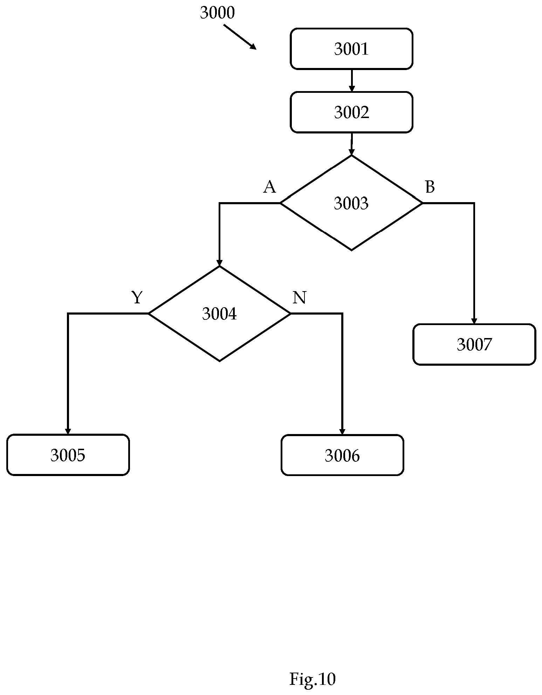

In this example, as illustrated by the flowchart of Figure 10, when the virtual station 83 is initiated and a communication channel is created between the master 20, 30 and the virtual station, the address of the group and a virtual station identifier are assigned to the virtual station (step 3001). Preferably, the identifier assigned to the virtual station 83 is a special identifier, reserved for the virtual station 83 (i.e., different from the identifiers assigned to the remaining slaves 40, 50 and different from the identifier assigned to the master 20, 30 of the same group).

In addition, each slave 40, 50 executes a recording process at its own master 20, 30 once the communication channel with the master 20, 30 of the group has been established and the group address and its slave identifier have been obtained. The recording process requires that a unique access token, which is associated to the logical address of the group of stations 20-50, be transmitted to each slave. The access token is basically a unique access password, which must be presented by the slave 40, 50 to the master 20, 30 in order to be able to exchange master information 20, 30. Advantageously, albeit not in a limiting manner, each access token is associated to only one logical address. In other words, a slave 40, 50 receives authorisation to communicate from the master 20, 30 after a verification of the access token. This authorisation is granted only to slaves 40, 50 having an access token associated to the logical address of the membership group of the master 20, 30 to which the request is forwarded.

In this example, also the virtual station 83 receives a unique access token that permits to enable the exchange of information with the respective master 20, 30 (3002).

Once this initialization step has been completed, the virtual station 83 is uniquely associated to a corresponding group, i.e. to at least one indoor station. Consequently, the stations 20-50 and 83 of the group are able to communicate with the outdoor station 10 and/or indoor stations belonging to other groups of the system 1 through the master 20, 30 of the group that receives and routes communications towards and from the slaves 40, 50 and the virtual station 83.

In this case, the virtual station 83 receives and answers to the requests of playing back audio and/or video recordings stored only if made by stations 20 - 50 that have the same logical (group) address - i.e. they belong to the same group - and that have an access token validly associated to the logical address, thus guaranteeing the confidentiality of the confidential information transmitted in the system 1 as described in the method 2000. For example, in case of a playback request (output branch A of decision step 3003), the master 20, 30 forwards a request to play back audio and/or video recordings to the virtual station 83 (step 3005) only after having verified that the logical address and the access token of the requester match the logical address and to one of the assigned access tokens (decision step 3004) otherwise the request is rejected (step 3006).

Preferably, in case of reception at the virtual station 83 of an audio/video stream in input (output branch B of decision step 3003), the virtual station 83 is configured to store the data of the audio/video recordings within a memory area identified by an address or logical path, uniquely associated to the logical address attributed to the membership group of the virtual station 83 (step 3007), during the execution of audio and/or video recordings (as described in the method 1000). Consequently, only the virtual station 83 having the correct logical address can access the memory area associated to a particular group - and, therefore, to the audio and/or video recordings stored therein - guaranteeing further security and confidentiality of the data.

Of course, the same operations can be executed in the event that the system 1 comprises a central gateway 90, which will create a virtual station 83 for each of the groups into which the indoor stations 20-50 of the system 1 are subdivided and will permit the communication with a virtual station 83 - and, therefore, access to audio and/or video recordings - to the indoor stations 20-50 only that have the same logical address assigned to the virtual station 83 and a valid token as described above, *mutatis mutandis.*

In other embodiments (not illustrated), the system comprises two or more outdoor stations.

In addition or alternatively, the gateway may be configured to manage the exchange of data between indoor stations and portable devices through a telecommunications infrastructure - for example a cellular telephone network.

In one embodiment, the recordings may be stored in a dedicated archiving device, for example connected to a central gateway.

As will be apparent to the person skilled in the art, one or more optional steps can be added or removed from one or more of the procedures described above.

In one embodiment, the audio/video recording method is initiated by receiving at the master a call initiation message emitted by an indoor station belonging to a group of indoor stations that is installed in a unit different from the unit in which the recipient indoor station is installed.

In general, the methods described above form an overall method for the management of answering service functionalities in a video intercom system. In addition, one or more steps of the methods presented above may be performed in parallel with each other. Similarly, one or more optional steps can be added or removed from one or more of the procedures described above.

Naturally, all the details can be replaced with other technically-equivalent elements.

For example, a request to play back an audio and/or video data stream may also be executed by a main indoor station at the request of a user interacting therewith.

In conclusion, the materials used, as well as the shapes and contingent dimensions of the devices, apparatuses and terminals mentioned above, may be any according to the specific implementation needs without thereby departing from the scope of protection of the following claims.

## Claims

1. Video intercom system (1) comprising:
an outdoor station (10),
a plurality of indoor stations (30, 40, 50), and
a station management device (20, 30, 90),
wherein the station management device (20, 30, 90):
receives a call from the outdoor station (10) or from one of the indoor stations (30, 40, 50) which is directed to at least one recipient indoor station (30, 40, 50), activates a virtual station (83),
wherein
the indoor stations (30, 40, 50) are divided into a plurality of groups, and
the virtual station (83) is a virtual machine that replicates the operation of an indoor station, and
the station management device (20, 30, 90):
activates a virtual station corresponding to the group of indoor stations (30, 40, 50) to which the recipient indoor station belongs,
associates the virtual station (83) to the recipient indoor station (30, 40, 50),
forwards at least one between a video data stream and an audio data stream to the virtual station (83) transmitted from the outdoor station (10) or from the indoor station (30, 40, 50), and
deactivates the virtual station (83) at the end of the call, and
wherein the virtual station (83):
stores at least one portion of the received video data stream and/or audio data stream.

2. System (1) according to claim 1, wherein the station management device (20, 30, 90):
receives a request to play back the at least one portion of the video data stream and/or audio data stream from an indoor station (30, 40, 50) of the group of indoor stations (30, 40, 50) to which the recipient indoor station belongs,
activates the virtual station (83) corresponding to the group of indoor stations (30, 40, 50) to which the requesting indoor station belongs,
wherein the virtual station (83):
transmits the at least one stored portion of the video data stream and/or audio data stream to the indoor station (30, 40, 50), and
wherein the station management device (20, 30, 90) further:
deactivates the virtual station (83) at the end of the transmission of the at least one stored portion of the video data stream and/or audio data stream.

3. System (1) according to claim 1 or 2, wherein the management device:
executes a call management software process (81),
executes a virtual station management software process (82), and
wherein the call comprises a call message, which is received by the call management software process (81), and
upon receipt of the call message:
the call management software process (81) notifies the start of the call to the virtual station management software process (82),
the virtual station management software process (82) activates the virtual station (83),
the virtual station (83) transmits a recording message to the call management software process (81),
the call management software process (81) transmits the call start message to the virtual station (83),
the virtual station (83) provides to store at least one part of the received video data stream and/or audio data stream,
the call management software process (81) forwards the video data stream and/or audio data stream coming from the outdoor station (10) or from the indoor station (30, 40, 50) making the call,
once at least one part of the received video data stream and/or audio data stream has been stored, the virtual station (83) transmits a call end signal to the call management software process (81).

4. System (1) according to claim 3, wherein the outdoor station (10) or the indoor station (20, 30, 40, 50) sends a call end message to the call management software process (81) at the end of the call, and
wherein the call management software process (81) notifies the end of the call to the virtual station management software process (82),
upon receipt of the call end notification, the virtual station management software process (82) sends a power-off command to the virtual station (83),
upon receipt of the power-off command, the virtual station (83) completes storing the at least one part of the received video data stream and/or audio data stream and deactivates itself.

5. System (1) according to claim 2 or according to claim 3 or 4 and claim 2, wherein
the management device (20, 30, 90):
executes a call management software process (81),
executes a virtual station management software process (82), and
wherein upon receipt of the playback request of the at least one portion of the video data stream and/or audio data stream:
the call management software process (81) notifies the playback request to the virtual station management software process (82),
the virtual station management software process (82) activates the virtual station (83),
the virtual station (83):
initiates a playback functionality of the at least one portion of the stored video data stream and/or audio data stream,
transmits the at least one portion of the stored video data stream and/or audio data stream to the indoor station (30, 40, 50) that made the playback request, and
once the transmission of the stored video data stream and/or audio data stream has been completed, it sends a playback end message to the indoor station (30, 40, 50) that made the playback request, and
the virtual station management software process (82) deactivates the virtual station (83) once the latter has transmitted the playback end message.

6. System (1) according to any one of the preceding claims, wherein the storage of at least one portion of the video data stream and/or audio data stream is kept in a memory area (22, 312) of the station management device (20, 30, 90).

7. System (1) according to claim 6, wherein the memory area (22, 312) where the at least one portion of the video data stream and/or audio data stream is stored is uniquely associated to the corresponding group of indoor stations (30, 40, 50) to which the recipient indoor station (30, 40, 50) belongs.

8. System (1) according to claim 2, wherein the station management device (20, 30, 90) verifies a logical address associated to the recipient indoor station (30, 40, 50) that requested to play back the at least one portion of the video data stream and/or audio data stream from an indoor station (30, 40, 50), and if the logical address corresponds to an expected logical address, it forwards the request to play back the at least one portion of the video data stream and/or audio data stream to the virtual station (83).

9. System (1) according to any one of the preceding claims, wherein the station management device (20, 30, 90) is:
an indoor station (30) connected to the outdoor station (10) and to at least another indoor station (40, 50) of the plurality of indoor stations (30, 40, 50),
a control module (20) connected to the outdoor station (10) to at least another indoor station (40, 50) of the plurality of indoor stations (30, 40, 50) or
a control module (90) connected to the outdoor station (10) and to the plurality of indoor stations (30, 40, 50).

10. Method (1000, 2000, 3000) for managing a video intercom system (1), the video intercom system (1) comprising an outdoor station (10), a plurality of indoor stations (30, 40, 50), and a station management device (20, 30, 90),
wherein the method (1000, 2000, 3000) comprises having the station management device (20, 30, 90) performing the steps of:
receiving (1001) a call from the outdoor station (10) or from one of the indoor stations (30, 40, 50) which is directed to at least one recipient indoor station (20, 30, 40, 50),
activating (1002-1004) a virtual station (83),
wherein
the indoor stations (30, 40, 50) are divided into a plurality of groups, and
the virtual station (83) is a virtual machine that replicates the operation of an indoor station, and
the method (1000, 2000, 3000) further comprises having the station management device (20, 30, 90) performing the steps of:
activating a virtual station corresponding to the group of indoor stations (30, 40, 50) to which the recipient indoor station belongs,
associating the virtual station (83) to the recipient indoor station (20, 30, 40, 50), forwarding (1011) at least one between a video data stream and an audio data stream transmitted from the outdoor station (10) or from the indoor station (30, 40, 50) to the virtual station (83), and
deactivating (1016-1017) the virtual station (83) at the end of the call, and
wherein the virtual station (83) performs the step of:
storing (1012, 1017) at least one portion of the received video data stream and/or audio data stream.

11. Method (1000, 2000, 3000) according to claim 10, wherein the station management device (20, 30, 90) performs the steps of:
receiving (2101) a request to play back the at least one portion of the video data stream and/or audio data stream from an indoor station (30, 40, 50) of the group of indoor stations (30, 40, 50) to which the recipient indoor station belongs,
activating (2003-2004) the virtual station (83) corresponding to the group of indoor stations (30, 40, 50) to which the requesting indoor station belongs, and
wherein the virtual station (83) performs the step of:
transmitting (2007-2008) the at least one stored portion of the video data stream and/or audio data stream to the indoor station (30, 40, 50), and
wherein the station management device (20, 30, 90) performs the further step of:
deactivating (2013) the virtual station (83) at the end of the transmission of the at least one stored portion of the video data stream and/or audio data stream.

12. Method (1000, 2000, 3000) according to claim 10 or 11 wherein the step of
storing (1012, 1017) at least one portion of the received video data stream and/or audio data stream, provides for uniquely associating a memory area to the recipient indoor station (30, 40, 50), and
storing (3007) the at least one portion of the video data stream and/or audio data stream in the memory area uniquely associated to the recipient indoor station (30, 40, 50).

## Patentansprüche

1. Video-Gegensprechanlage (1), umfassend:
eine Außenstation (10),
mehrere Innenstationen (30, 40, 50), und
eine Stationsverwaltungsvorrichtung (20, 30, 90),
wobei die Stationsverwaltungsvorrichtung (20, 30, 90):
einen Anruf von der Außenstation (10) oder von einer der Innenstationen (30, 40, 50) empfängt, der an mindestens eine Empfänger-Innenstation (30, 40, 50) gerichtet ist, eine virtuelle Station (83) aktiviert,
wobei
die Innenstationen (30, 40, 50) in mehrere Gruppen unterteilt sind und die virtuelle Station (83) eine virtuelle Maschine ist, die den Betrieb einer Innenstation repliziert, und
die Stationsverwaltungsvorrichtung (20, 30, 90):
eine virtuelle Station aktiviert, die der Gruppe von Innenstationen (30, 40, 50) entspricht, zu der die Empfänger-Innenstation gehört,
die virtuelle Station (83) der Empfänger-Innenstation (30, 40, 50) zuordnet, einen Videodatenstrom und/oder einen Audiodatenstrom an die virtuelle Station (83) weiterleitet, die von der Außenstation (10) oder von der Innenstation (30, 40, 50) übertragen werden, und
die virtuelle Station (83) am Ende des Anrufs deaktiviert, und
wobei die virtuelle Station (83):
mindestens einen Teil des empfangenen Videodatenstroms und/oder Audiodatenstroms speichert.

2. System (1) nach Anspruch 1, wobei die Stationsverwaltungsvorrichtung (20, 30, 90):
eine Anforderung zum Wiedergeben des mindestens einen Teils des Videodatenstroms und/oder Audiodatenstroms von einer Innenstation (30, 40, 50) der Gruppe von Innenstationen (30, 40, 50), zu der die Empfänger-Innenstation gehört, empfängt,
die virtuelle Station (83) aktiviert, die der Gruppe von Innenstationen (30, 40, 50) entspricht, zu der die anfordernde Innenstation gehört,
wobei die virtuelle Station (83):
den mindestens einen gespeicherten Teil des Videodatenstroms und/oder Audiodatenstroms an die Innenstation (30, 40, 50) überträgt, und
wobei die Stationsverwaltungsvorrichtung (20, 30, 90) ferner:
die virtuelle Station (83) am Ende der Übertragung des mindestens einen gespeicherten Teils des Videodatenstroms und/oder Audiodatenstroms deaktiviert.

3. System (1) nach Anspruch 1 oder 2, wobei die Verwaltungsvorrichtung:
einen Anrufverwaltungssoftwareprozess (81) ausführt,
einen virtuellen Stationsverwaltungssoftwareprozess (82) ausführt, und wobei der Anruf eine Anrufnachricht umfasst, die durch den Anrufverwaltungssoftwareprozess (81) empfangen wird, und bei Empfang der Anrufnachricht:
der Anrufverwaltungssoftwareprozess (81) den Start des Anrufs an den virtuellen Stationsverwaltungssoftwareprozess (82) meldet,
der virtuelle Stationsverwaltungssoftwareprozess (82) die virtuelle Station (83) aktiviert,
die virtuelle Station (83) eine Aufzeichnungsnachricht an den Anrufverwaltungssoftwareprozess (81) überträgt,
der Anrufverwaltungssoftwareprozess (81) die Anrufstartnachricht an die virtuelle Station (83) überträgt,
die virtuelle Station (83) vorsieht, mindestens einen Teil des empfangenen Videodatenstroms und/oder Audiodatenstroms zu speichern,
der Anrufverwaltungssoftwareprozess (81) den Videodatenstrom und/oder Audiodatenstrom weiterleitet, der von der Außenstation (10) oder von der Innenstation (30, 40, 50) kommt, die den Anruf tätigt,
sobald mindestens ein Teil des empfangenen Videodatenstroms und/oder Audiodatenstroms gespeichert wurde, die virtuelle Station (83) ein Anrufendesignal an den Anrufverwaltungssoftwareprozess (81) überträgt.

4. System (1) nach Anspruch 3, wobei die Außenstation (10) oder die Innenstation (20, 30, 40, 50) eine Anrufendenachricht an den Anrufverwaltungssoftwareprozess (81) am Ende des Anrufs sendet, und
wobei der Anrufverwaltungssoftwareprozess (81) das Ende des Anrufs an den virtuellen Stationsverwaltungssoftwareprozess (82) meldet,
bei Empfang der Anrufendemeldung der virtuelle Stationsverwaltungssoftwareprozess (82) einen Ausschaltbefehl an die virtuelle Station (83) sendet,
bei Empfang des Ausschaltbefehls die virtuelle Station (83) das Speichern des mindestens einen Teils des empfangenen Videodatenstroms und/oder Audiodatenstroms abschließt und sich selbst deaktiviert.

5. System (1) nach Anspruch 2 oder nach Anspruch 3 oder 4 und Anspruch 2,
wobei die Verwaltungsvorrichtung (20, 30, 90):
einen Anrufverwaltungssoftwareprozess (81) ausführt,
einen virtuellen Stationsverwaltungssoftwareprozess (82) ausführt, und
wobei bei Empfang der Wiedergabeanforderung des mindestens einen Teils des Videodatenstroms und/oder Audiodatenstroms:
der Anrufverwaltungssoftwareprozess (81) die Wiedergabeanforderung an den virtuellen Stationsverwaltungssoftwareprozess (82) meldet,
der Verwaltungssoftwareprozess (82) der virtuellen Station die virtuelle Station (83) aktiviert,
wobei die virtuelle Station (83):
eine Wiedergabefunktionalität des mindestens einen Teils des gespeicherten Videodatenstroms und/oder Audiodatenstroms initiiert,
den mindestens einen Teil des gespeicherten Videodatenstroms und/oder Audiodatenstroms an die Innenstation (30, 40, 50) überträgt, die die Wiedergabeanforderung gestellt hat, und
nach Abschluss der Übertragung des gespeicherten Videodatenstroms und/oder Audiodatenstroms eine Wiedergabeendenachricht an die Innenstation (30, 40, 50) sendet, die die Wiedergabeanforderung gestellt hat, und
der Verwaltungssoftwareprozess (82) der virtuellen Station die virtuelle Station (83) deaktiviert, nachdem diese die Wiedergabeendenachricht übertragen hat.

6. System (1) nach einem der vorhergehenden Ansprüche, wobei die Speicherung mindestens eines Teils des Videodatenstroms und/oder Audiodatenstroms in einem Speicherbereich (22, 312) der Stationsverwaltungsvorrichtung (20, 30, 90) gehalten wird.

7. System (1) nach Anspruch 6, wobei der Speicherbereich (22, 312), in dem der mindestens eine Teil des Videodatenstroms und/oder Audiodatenstroms gespeichert ist, eindeutig der entsprechenden Gruppe von Innenstationen (30, 40, 50) zugeordnet ist, zu der die Empfänger-Innenstation (30, 40, 50) gehört.

8. System (1) nach Anspruch 2, wobei die Stationsverwaltungsvorrichtung (20, 30, 90) eine logische Adresse verifiziert, die der Empfänger-Innenstation (30, 40, 50) zugeordnet ist, die die Wiedergabe des mindestens einen Teils des Videodatenstroms und/oder Audiodatenstroms von einer Innenstation (30, 40, 50) angefordert hat, und wenn die logische Adresse einer erwarteten logischen Adresse entspricht, die Anforderung zur Wiedergabe des mindestens einen Teils des Videodatenstroms und/oder Audiodatenstroms an die virtuelle Station (83) weiterleitet.

9. System (1) nach einem der vorhergehenden Ansprüche, wobei die Stationsverwaltungsvorrichtung (20, 30, 90) Folgendes ist:
eine Innenstation (30), die mit der Außenstation (10) und mit mindestens einer weiteren Innenstation (40, 50) der mehreren Innenstationen (30, 40, 50) verbunden ist,
ein Steuermodul (20), das mit der Außenstation (10) mit mindestens einer weiteren Innenstation (40, 50) der mehreren Innenstationen (30, 40, 50) verbunden ist, oder
ein Steuermodul (90), das mit der Außenstation (10) und mit den mehreren Innenstationen (30, 40, 50) verbunden ist.

10. Verfahren (1000, 2000, 3000) zum Verwalten eines Video-Gegensprechsystems (1), wobei das Video-Gegensprechsystem (1) eine Außenstation (10), eine Vielzahl von Innenstationen (30, 40, 50) und eine Stationsverwaltungsvorrichtung (20, 30, 90) umfasst, wobei das Verfahren (1000, 2000, 3000) umfasst, dass die Stationsverwaltungsvorrichtung (20, 30, 90) die folgenden Schritte durchführt:
Empfangen (1001) eines Anrufs von der Außenstation (10) oder von einer der Innenstationen (30, 40, 50), der an mindestens eine Empfänger-Innenstation (20, 30, 40, 50) gerichtet ist,
Aktivieren (1002-1004) einer virtuellen Station (83),
wobei
die Innenstationen (30, 40, 50) in eine Vielzahl von Gruppen unterteilt sind, und
die virtuelle Station (83) eine virtuelle Maschine ist, die den Betrieb einer Innenstation repliziert, und
das Verfahren (1000, 2000, 3000) ferner umfasst, dass die Stationsverwaltungsvorrichtung (20, 30, 90) die folgenden Schritte durchführt:
Aktivieren einer virtuellen Station, die der Gruppe von Innenstationen (30, 40, 50) entspricht, zu der die Empfänger-Innenstation gehört, Zuordnen der virtuellen Station (83) zu der Empfänger-Innenstation (20, 30, 40, 50),
Weiterleiten (1011) mindestens eines Videodatenstroms und/oder eines Audiodatenstroms, die von der Außenstation (10) oder von der Innenstation (30, 40, 50) an die virtuelle Station (83) übertragen werden, und
Deaktivieren (1016-1017) der virtuellen Station (83) am Ende des Anrufs, und
wobei die virtuelle Station (83) den folgenden Schritt durchführt:
Speichern (1012, 1017) mindestens eines Teils des empfangenen Videodatenstroms und/oder Audiodatenstroms.

11. Verfahren (1000, 2000, 3000) nach Anspruch 10, wobei die Stationsverwaltungsvorrichtung (20, 30, 90) die folgenden Schritte durchführt:
Empfangen (2101) einer Anforderung zum Wiedergeben des mindestens einen Teils des Videodatenstroms und/oder Audiodatenstroms von einer Innenstation (30, 40, 50) der Gruppe von Innenstationen (30, 40, 50), zu der die Empfänger-Innenstation gehört,
Aktivieren (2003-2004) der virtuellen Station (83), die der Gruppe von Innenstationen (30, 40, 50) entspricht, zu der die anfordernde Innenstation gehört, und
wobei die virtuelle Station (83) den folgenden Schritt durchführt:
Übertragen (2007-2008) des mindestens einen gespeicherten Teils des Videodatenstroms und/oder Audiodatenstroms an die Innenstation (30, 40, 50), und
wobei die Stationsverwaltungsvorrichtung (20, 30, 90) den folgenden weiteren Schritt durchführt:
Deaktivieren (2013) der virtuellen Station (83) am Ende der Übertragung des mindestens einen gespeicherten Teils des Videodatenstroms und/oder Audiodatenstroms.

12. Verfahren (1000, 2000, 3000) nach Anspruch 10 oder 11, wobei der Schritt des Speicherns (1012, 1017) mindestens eines Teils des empfangenen Videodatenstroms und/oder Audiodatenstroms das eindeutige Zuordnen eines Speicherbereichs zu der Empfänger-Innenstation (30, 40, 50) und das Speichern (3007) des mindestens einen Teils des Videodatenstroms und/oder Audiodatenstroms in dem Speicherbereich, der eindeutig der Empfänger-Innenstation (30, 40, 50) zugeordnet ist, bereitstellt.

## Revendications

1. - Système d'interphone vidéo (1) comprenant :
un poste extérieur (10),
une pluralité de postes intérieurs (30, 40, 50), et
un dispositif de gestion des postes (20, 30, 90),
dans lequel le dispositif de gestion des postes (20, 30, 90) :
reçoit un appel en provenance du poste extérieur (10) ou en provenance de l'un des postes intérieurs (30, 40, 50) qui est dirigé vers au moins un poste intérieur récepteur (30, 40, 50),
active un poste virtuel (83),
dans lequel les postes intérieurs (30, 40, 50) sont divisés en une pluralité de groupes, et le poste virtuel (83) est une machine virtuelle qui réplique le fonctionnement d'un poste intérieur, et le dispositif de gestion des postes (20, 30, 90):
active un poste virtuel correspondant au groupe de postes intérieurs (30, 40, 50) auquel appartient le poste intérieur récepteur,
associe le poste virtuel (83) au poste intérieur récepteur (30, 40, 50),
transfère au moins l'un entre un flux de données vidéo et un flux de données audio vers le poste virtuel (83) transmis à partir du poste extérieur (10) ou à partir du poste intérieur (30, 40, 50), et
désactive le poste virtuel (83) à la fin de l'appel, et
dans lequel le poste virtuel (83) :
stocke au moins une partie du flux de données vidéo et/ou du flux de données audio reçus.

2. - Système (1) selon la revendication 1, dans lequel le dispositif de gestion des postes (20, 30, 90) :
reçoit une demande de lecture de l'au moins une partie du flux de données vidéo et/ou du flux de données audio en provenance d'un poste intérieur (30, 40, 50) du groupe de postes intérieurs (30, 40, 50) auquel appartient le poste intérieur récepteur,
active le poste virtuel (83) correspondant au groupe de postes intérieurs (30, 40, 50) auquel appartient le poste intérieur demandeur,
dans lequel le poste virtuel (83) :
transmet l'au moins une partie stockée du flux de données vidéo et/ou du flux de données audio au poste intérieur (30, 40, 50), et
dans lequel le dispositif de gestion des postes (20, 30, 90) en outre :
désactive le poste virtuel (83) à la fin de la transmission de l'au moins une partie stockée du flux de données vidéo et/ou du flux de données audio.

3. - Système (1) selon la revendication 1 ou 2, dans lequel le dispositif de gestion :
exécute un processus logiciel de gestion des appels (81),
exécute un processus logiciel de gestion du poste virtuel (82), et
dans lequel l'appel comprend un message d'appel, qui est reçu par le processus logiciel de gestion des appels (81), et
à la réception du message d'appel :
le processus logiciel de gestion des appels (81) notifie le début de l'appel au processus logiciel de gestion du poste virtuel (82),
le processus logiciel de gestion du poste virtuel (82) active le poste virtuel (83),
le poste virtuel (83) transmet un message d'enregistrement au processus logiciel de gestion des appels (81),
le processus logiciel de gestion des appels (81) transmet le message de début d'appel au poste virtuel (83),
le poste virtuel (83) permet de stocker au moins une partie du flux de données vidéo et/ou du flux de données audio reçus,
le processus logiciel de gestion des appels (81) transfère le flux de données vidéo et/ou le flux de données audio provenant du poste extérieur (10) ou provenant du poste intérieur (30, 40, 50) effectuant l'appel,
une fois qu'au moins une partie du flux de données vidéo et/ou du flux de données audio reçus a été stockée, le poste virtuel (83) transmet un signal de fin d'appel au processus logiciel de gestion des appels (81).

4. - Système (1) selon la revendication 3, dans lequel le poste extérieur (10) ou le poste intérieur (20, 30, 40, 50) envoie un message de fin d'appel au processus logiciel de gestion des appels (81) à la fin de l'appel, et
dans lequel le processus logiciel de gestion des appels (81) notifie la fin de l'appel au processus logiciel de gestion du poste virtuel (82),
à la réception de la notification de fin d'appel, le processus logiciel de gestion du poste virtuel (82) envoie une instruction de mise hors tension au poste virtuel (83),
à la réception de l'instruction de mise hors tension, le poste virtuel (83) termine le stockage de l'au moins une partie du flux de données vidéo et/ou du flux de données audio reçus et se désactive.

5. - Système (1) selon la revendication 2 ou selon la revendication 3 ou 4 et la revendication 2, dans lequel le dispositif de gestion (20, 30, 90) :
exécute un processus logiciel de gestion des appels (81),
exécute un processus logiciel de gestion du poste virtuel (82), et dans lequel, à la réception de la demande de lecture de l'au moins une partie du flux de données vidéo et/ou du flux de données audio :
le processus logiciel de gestion des appels (81) notifie la demande de lecture au processus logiciel de gestion du poste virtuel (82),
le processus logiciel de gestion du poste virtuel (82) active le poste virtuel (83),
le poste virtuel (83) :
initie une fonctionnalité de lecture de l'au moins une partie du flux de données vidéo et/ou du flux de données audio stockés,
transmet l'au moins une partie du flux de données vidéo et/ou du flux de données audio stockés au poste intérieur (30, 40, 50) qui a fait la demande de lecture, et
une fois que la transmission du flux de données vidéo et/ou du flux de données audio stockés a été terminée, **il** envoie un message de fin de lecture au poste intérieur (30, 40, 50) qui a fait la demande de lecture, et
le processus logiciel de gestion du poste virtuel (82) désactive le poste virtuel (83) une fois que ce dernier a transmis le message de fin de lecture.

6. - Système (1) selon l'une quelconque des revendications précédentes, dans lequel le stockage d'au moins une partie du flux de données vidéo et/ou du flux de données audio est conservé dans une zone de mémoire (22, 312) du dispositif de gestion des postes (20, 30, 90).

7. - Système (1) selon la revendication 6, dans lequel la zone de mémoire (22, 312) où est stockée l'au moins une partie du flux de données vidéo et/ou du flux de données audio est associée de manière unique au groupe correspondant de postes intérieurs (30, 40, 50) auquel appartient le poste intérieur récepteur (30, 40, 50).

8. - Système (1) selon la revendication 2, dans lequel le dispositif de gestion des postes (20, 30, 90) vérifie une adresse logique associée au poste intérieur récepteur (30, 40, 50) qui a demandé à lire l'au moins une partie du flux de données vidéo et/ou du flux de données audio à partir d'un poste intérieur (30, 40, 50), et si l'adresse logique correspond à une adresse logique attendue, il transfère la demande de lecture de l'au moins une partie du flux de données vidéo et/ou du flux de données audio au poste virtuel (83).

9. - Système (1) selon l'une quelconque des revendications précédentes, dans lequel le dispositif de gestion des postes (20, 30, 90) est :
un poste intérieur (30) connecté au poste extérieur (10) et à au moins un autre poste intérieur (40, 50) de la pluralité de postes intérieurs (30, 40, 50),
un module de commande (20) connecté au poste extérieur (10) et à au moins un autre poste intérieur (40, 50) de la pluralité de postes intérieurs (30, 40, 50), ou
un module de commande (90) connecté au poste extérieur (10) et à la pluralité de postes intérieurs (30, 40, 50).

10. - Procédé (1000, 2000, 3000) de gestion d'un système d'interphone vidéo (1), le système d'interphone vidéo (1) comprenant un poste extérieur (10), une pluralité de postes intérieurs (30, 40, 50) et un dispositif de gestion des postes (20, 30, 90), dans lequel le procédé (1000, 2000, 3000) comprend la réalisation par le dispositif de gestion des postes (20, 30, 90) des étapes consistant à :
recevoir (1001) un appel en provenance du poste extérieur (10) ou en provenance de l'un des postes intérieurs (30, 40, 50) qui est dirigé vers au moins un poste intérieur récepteur (20, 30, 40, 50),
activer (1002-1004) un poste virtuel (83),
dans lequel les postes intérieurs (30, 40, 50) sont divisés en une pluralité de groupes, et le poste virtuel (83) est une machine virtuelle qui réplique le fonctionnement d'un poste intérieur, et le procédé (1000, 2000, 3000) comprend en outre la réalisation par le dispositif de gestion des postes (20, 30, 90) des étapes consistant à:
activer un poste virtuel correspondant au groupe de postes intérieurs (30, 40, 50) auquel appartient le poste intérieur récepteur,
associer le poste virtuel (83) au poste intérieur récepteur (20, 30, 40, 50),
transférer (1011) au moins l'un entre un flux de données vidéo et un flux de données audio transmis à partir du poste extérieur (10) ou à partir du poste intérieur (30, 40, 50) au poste virtuel (83), et
désactiver (1016-1017) le poste virtuel (83) à la fin de l'appel, et
dans lequel le poste virtuel (83) réalisé l'étape consistant à :
stocker (1012, 1017) au moins une partie du flux de données vidéo et/ou du flux de données audio reçus.

11. - Procédé (1000, 2000, 3000) selon la revendication 10, dans lequel le dispositif de gestion des postes (20, 30, 90) réalise les étapes consistant à :
recevoir (2101) une demande de lecture de l'au moins une partie du flux de données vidéo et/ou du flux de données audio provenant d'un poste intérieur (30, 40, 50) du groupe de postes intérieurs (30, 40, 50) auquel appartient le poste intérieur récepteur,
activer (2003-2004) le poste virtuel (83) correspondant au groupe de postes intérieurs (30, 40, 50) auquel appartient le poste intérieur récepteur, et
dans lequel le poste virtuel (83) réalise l'étape consistant à :
transmettre (2007-2008) l'au moins une partie stockée du flux de données vidéo et/ou du flux de données audio au poste intérieur (30, 40, 50), et dans lequel le dispositif de gestion des postes (20, 30, 90) réalise l'étape supplémentaire consistant à :
désactiver (2013) le poste virtuel (83) à la fin de la transmission de l'au moins une partie stockée du flux de données vidéo et/ou du flux de données audio.

12. - Procédé (1000, 2000, 3000) selon la revendication 10 ou 11, dans lequel l'étape de stockage (1012, 1017) d'au moins une partie du flux de données vidéo et/ou du flux de données audio reçus prévoit de:
associer de manière unique une zone de mémoire au poste intérieur récepteur (30, 40, 50), et
stocker (3007) l'au moins une partie du flux de données vidéo et/ou du flux de données audio dans la zone de mémoire associée de manière unique au poste intérieur récepteur (30, 40, 50).
